# EUROPEAN PATENT SPECIFICATION

(11) **EP 4 532 205 B1**
(45) Date of publication and mention of the grant of the patent: **18.02.2026**
(21) Application number: 23724404.1
(22) Date of filing: 05.05.2023
(51) Int. Cl.: B32B 27/12, B32B 5/02, B32B 27/34, B32B 27/36, B32B 27/40

(54) **HEAT- TRANSFERABLE LAYERED ITEM SUITED TO BE PRINTED WITH INKJET TECHNOLOGY, METHOD FOR ITS PRODUCTION AND METHOD FOR APPLYING IT TO AN OBJECT, PREFERABLY TO A FABRIC OR GARMENT**
WÄRMEÜBERTRAGBARES, TINTENSTRAHLDRUCKTAUGLICHES SCHICHTMATERIAL, VERFAHREN ZU SEINER HERSTELLUNG UND VERFAHREN ZU SEINER AUFBRINGUNG AUF EINEN GEGENSTAND, VORZUGSWEISE AUF EIN GEWEBE ODER KLEIDUNGSSTÜCK
ARTICLE EN COUCHES TRANSFÉRABLE PAR LA CHALEUR APPROPRIÉ POUR ÊTRE IMPRIMÉ AVEC UNE TECHNOLOGIE À JET D'ENCRE, SON PROCÉDÉ DE PRODUCTION ET SON PROCÉDÉ D'APPLICATION SUR UN OBJET, DE PRÉFÉRENCE SUR UN TISSU OU UN VÊTEMENT

(30) Priority: 25.05.2022 IT 202200010871
(43) Date of publication of application: 09.04.2025
(73) Proprietor: SISER S.R.L. (società unipersonale), 36100 Vicenza (VI) (IT)
(72) Inventor: CANACCI, Alessandro, 36047 Montegalda (VI) (IT); CAZZOLA, Marco, 36073 Cornedo Vicentino (VI) (IT); COVOLO, Marco, 36042 Breganze (VI) (IT)
(74) Representative: Ziliotto, Tiziano
(86) International application number: PCT/IB2023/054694
(87) International publication number: WO 2023/227978

(56) References cited:
- EP-A1- 1 710 077
- EP-A1- 3 564 040

## Description

### STATE OF THE ART

The present invention is related to the field of application of decorations to objects. In particular, the present invention concerns the decoration of surfaces, for example of textiles, clothing items and/or accessories, which are suited to be subjected to heat treatments.

More specifically, the present invention concerns an item provided with a film suited to receive inks in such a way as to make it possible to decorate objects such as textiles in general by means of such inks, as well as a method for the production and/or manufacture of said item.

The invention also concerns a method for the production and/or manufacture of said item as well as a method for decorating the object to be decorated.

### DESCRIPTION OF THE STATE OF THE ART

Different techniques are known in the art for decorating articles made of fabric in general, such as T-shirts, sweatshirts, caps, shoes, trousers, bags, or similar garments and/or accessories.

The known techniques for decorating fabrics include the more traditional ones, according to which the desired decorations (lettering, figures, or the like) are created through the direct application of suitable inks to the fabrics themselves, for example by means of stencil techniques.

More recently developed techniques are also known, according to which the desired figures or decorations are not created directly onto fabrics but onto layered items that are subsequently applied to the fabrics through the simultaneous application of heat and pressure. Among other things, these techniques are appreciated because printing on layered items is much easier than printing directly onto fabrics, wherein printing on layered items makes it possible to create decorations of the most varied types and shapes. In practice, layered items comprise at least one layer, the so-called finish layer, which is suited to receive inks, more specifically inks for inkjet printers, and at least one thermo-adhesive layer. The desired decoration is advantageously printed on the finish layer and the item is subsequently placed on the fabric or garment, in the desired position and with the thermo-adhesive layer in contact with the fabric or garment, and applied (fixed) to the latter by means of heat and pressure, thereby making the thermo-adhesive layer adhere to the fabric or clothing item. The printing method summed up above makes it possible to quickly apply decorations to fabrics or garments.

Furthermore, the known techniques make it possible to obtain the desired decorations on the fabric or garment by advantageously printing the layered items with common home inkjet printers. This technology is particularly advantageous thanks to the fact that it is widespread and accessible to anyone at low implementation costs.

However, the decoration methods according to the known art, in particular the use of printable layered items according to the known art, have certain drawbacks which in some cases are such as to drastically limit their use.

A drawback of the known technique lies in that the application of decorations to fabrics or garments does not guarantee acceptable results on the final product if the product is subjected to repeated washing cycles, especially when inks with dyes instead of pigments are used. After just a few washing cycles, colours fade and visible abrasions appear on the external surface of the material.

Another drawback of the known methods lies in that high temperatures and/or long application times are required to transfer the decorations onto the fabric or garment, which makes home application with an iron particularly difficult. An example of a layered item according to prior art is described in EP 1710077 A1.

It is therefore an object of the present invention to overcome the drawbacks mentioned above and observed in the printing media made according to the known technique.

It is a first object of the invention to propose a solution that can be used for making layered items suited to be printed with inks which, after transfer onto the fabric or garment, improve the washing fastness of the fabric or garment obtained, especially if inks containing dyes are used.

It is another object of the invention to propose a layered item suited to be printed with ink which makes it possible to use lower temperatures and/or shorter application times compared to the known methods.

### DESCRIPTION OF THE PRESENT INVENTION

The present invention is based on the general consideration that the drawbacks found in the layered items made according to the known art can be effectively overcome or at least minimized through the appropriate choice of the materials and execution techniques used to make the layer intended to receive the inks, preferably through the use of a mixture of polyamide powders in said layer intended to receive the inks.

According to a first aspect of the present invention, therefore, the same concerns a layered item suited to be printed with inks, preferably by means of inkjet technology, for decorating a surface of an object, in particular a surface of clothing articles such as T-shirts, sweatshirts or the like, said item comprising a thermo-adhesive layer suited to allow said item to be fixed to said surface and a finish layer suited to receive said inks, wherein said finish layer comprises a mixture of polyamide powders incorporated in a matrix of polymeric material, said mixture of polyamide powders comprising:
- a first polyamide powder having a specific surface area included between 15m²/g and 35 m²/g;
- a second polyamide powder having a specific surface area included between 3 m²/g and 15 m²/g;
- a third polyamide powder having its melting and softening point included between 160°C and 200°C.

This characteristic has the advantage that the first powder has a high absorption capacity and a high absorption speed. However, a layer made of this first powder only would tend to flake off, if used alone together with the third powder. To avoid flaking, the quantity of resin used should be increased, but this would lead to scarce ink absorption. Thus, the first powder acts with a synergistic effect together with the second powder. The second powder has a fair absorption capacity, but if it is used alone with the third powder the result will be an image with rather unclear contours. Therefore, using the second powder in synergy with the first makes it possible to reduce the use of the first powder and thus avoid the flaking effect, while at the same time maintaining a good degree of ink absorption and a sufficiently sharp image. The third powder remains indispensable, because it has an anti-abrasive function and makes the finish layer resistant to washing.

Preferably, said finish layer is printed by means of an inkjet printer.

In a preferred embodiment:
- said first polyamide powder is present in a weight percentage included between 25% and 65% with respect to the weight of said mixture, preferably in a weight percentage included between 40% and 50% with respect to the weight of said mixture, more preferably in a percentage equal to 44%; and/or
- said second polyamide powder is present in a weight percentage included between 25% and 65% with respect to the weight of said mixture, preferably in a weight percentage included between 40% and 50% with respect to the weight of said mixture, more preferably in a percentage equal to 44%; and/or
- said third polyamide powder is present in a weight percentage included between 3% and 18% with respect to the weight of said mixture, preferably in a weight percentage included between 10% and 15% with respect to the weight of said mixture, more preferably in a percentage equal to 12%.

Preferably, the mixture of polyamide powders is present in a weight percentage included between 250% and 450% with respect to the weight of said matrix of polymeric material, preferably between 300% and 400%, more preferably equal to 345%.

According to a preferred embodiment of the invention, the matrix of polymeric material comprises a polyurethane-based resin, more preferably an anionic aliphatic polyurethane modified polyester resin.

In a preferred embodiment, the matrix of polymeric material comprises:
- a bonding resin, preferably anionic aliphatic polyester polyurethane;
- a cross-linking agent, preferably free aliphatic isocyanate.

Preferably, the item comprises a supporting layer positioned in contact with the thermo-adhesive layer.

According to a preferred embodiment of the invention, the thermo-adhesive layer comprises a thermoplastic layer, preferably a polyurethane-based and/or copolyester-based and/or polyamide-based thermoplastic layer.

In a preferred embodiment, the item furthermore comprises an intermediate skin layer in contact with the thermo-adhesive layer and the finish layer.

Preferably, the second intermediate skin layer comprises polyurethane-based materials, or acrylic-based materials, or PVC, or LDPE.

According to another aspect of the present invention, the same concerns a method for producing an item as described above, wherein the method comprises the step of mutually combining said finish layer and said thermo-adhesive layer, wherein said finish layer is obtained starting from a mix comprising a mixture of polyamide powders incorporated in a matrix of polymeric material, said mixture of polyamide powders comprising:
- a first polyamide powder having a specific surface area included between 15 m²/g and 35 m²/g;
- a second polyamide powder having a specific surface area included between 3 m²/g and 15 m²/g;
- a third polyamide powder having its melting and softening point included between 160°C and 200°C.

In a preferred embodiment, the mutual coupling is obtained by spreading said at least one finish layer on the thermo-adhesive layer, preferably by spreading said at least one finish layer directly on the thermo-adhesive layer.

Preferably, the method comprises a step of making the intermediate skin layer that is formed by spreading a mix comprising polyurethane-based material, or acrylic-based material, or PVC, or LDPE on the thermo-adhesive layer. According to a preferred embodiment of the invention, the finish layer is spread on said intermediate skin layer.

Preferably, the thermo-adhesive layer is spread on the supporting layer.

According to a further aspect of the present invention, the same concerns an object comprising a decorated surface, wherein the decoration of said decorated surface is obtained through the application of an item as described above to said surface.

Preferably, said object comprises a fabric or a clothing article.

According to another aspect of the present invention, the same concerns a method for decorating the surface of an object with inks, using a layered item made as described above, the item comprising a supporting layer, wherein said method comprises the following steps:
a) printing said finish layer of said layered item through the application of inks, preferably by means of an inkjet printer;
b) making a carrier layer adhere to the printed surface of said finish layer;
c) removing the supporting layer;
d) making the thermo-adhesive layer adhere to the surface of the object to be decorated;
e) applying heat and pressure to said carrier layer for a predetermined time interval in order to fix said thermo-adhesive layer to the surface of the object to be decorated;
f) removing the carrier layer.

In a preferred embodiment, the method comprises, between step a) and step b), the following steps:
a1) making a silicone paper sheet adhere to the printed surface of said finish layer;
a2) applying heat and pressure to said silicone paper sheet for a predetermined time interval in order to fix the inks inside said finish layer;
a3) removing the silicone paper sheet.

### BRIEF DESCRIPTION OF THE DRAWINGS

The present invention is illustrated here below by means of the description of a preferred embodiment shown in the attached drawings. However, it should be noted that the present invention is not limited to the embodiment represented in the drawings. **In** particular, in the attached drawings:
- Figure 1 schematically shows the steps of the process for making a layered item according to a preferred embodiment of the present invention;
- Figure 2 shows an axonometric view of a layered item obtained through the process of Figure 1;
- Figure 3 shows a sectional view of the layered item of Figure 2;
- Figure 4 shows the printing step of the layered item of the invention;
- Figure 5 shows the layered item of the invention obtained through the printing step illustrated in Figure 4;
- Figures 6 and 7 show two alternative finishing steps carried out on the layered item of Figure 5;
- Figures from 8A to 8D show the steps of application of the layered item of Figure 6 to a garment according to a first application method;
- Figure 9 shows an object obtained by using the layered item according to the present invention;
- Figures from 10A to 10F show the steps of application of the layered item of Figure 6 to a garment according to a second application method.

### DETAILED DESCRIPTION OF SOME EMBODIMENTS OF THE PRESENT INVENTION

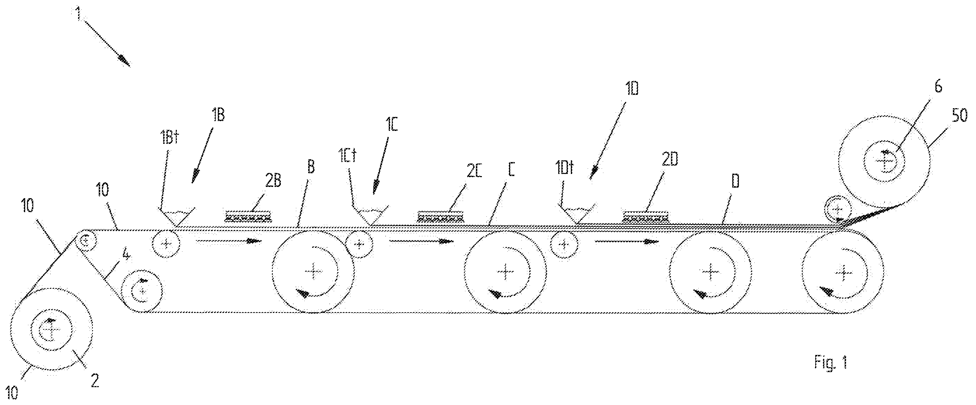

Figure 1 shows a system 1 for making a layered item 50 according to a preferred embodiment of the invention and according to a preferred embodiment of the method of the invention.

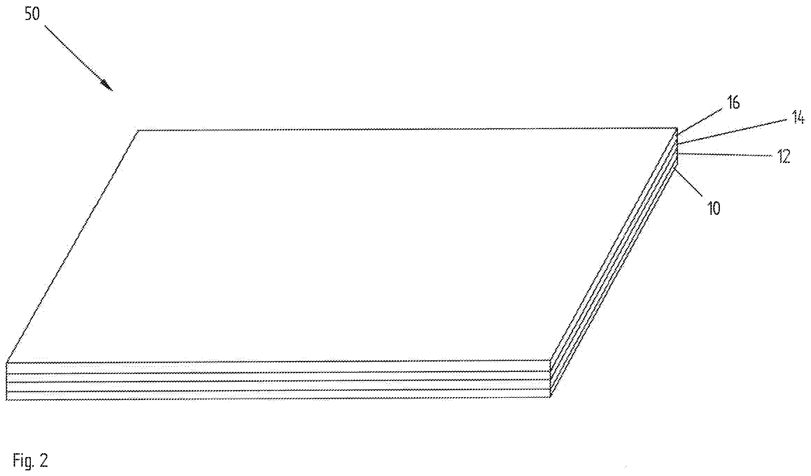

The item 50 made according to the preferred embodiment and obtained by means of said system 1 is shown, in particular, in Figure 2. In the figure, the item 50 is shown substantially in the form of a sheet, for example an A4 sheet.

However, the item that is the subject of the present invention may have any other desired shape and/or be wound on a reel, in the form of a film ready to be cut to size.

It should also be noted that in the figures, for ease of description, the thicknesses of the various layers as well as the proportions between them are merely indicative.

In Figure 1, the reference number 2 identifies a first reel on which a coating support 10 is wound.

The coating support 10, or supporting layer 10, serves the function of enabling the subsequent processing steps in the system 1 equipped with coating stations, as explained below.

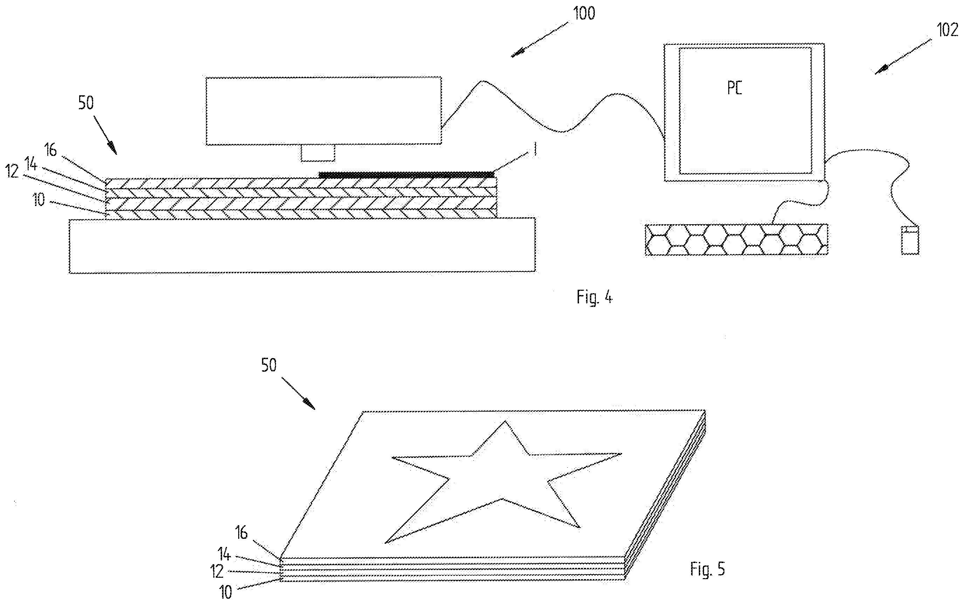

The coating support 10 also serves to facilitate the operations required for printing the item 50, as described in greater detail below, in particular to facilitate the insertion and removal of the item 50 into and from an ink printing machine, for example, preferably, in an inkjet printer (as shown in Figure 4).

The coating support 10 preferably comprises a polyester film, which can be made of pure polyester or treated with a silicone-based, polyolefin-based or chromium stearate-based release agent.

The thickness of the coating support 10 is preferably included between 50 and 120 micrometres, more preferably is equal to 75 micrometres.

In variant embodiments, said coating support can be made differently, for example it may comprise, preferably, paper treated with silicone-based and/or polyethylene-based and/or polypropylene-based and/or chromium stearate-based release agent, or in general any material capable of undergoing a coating process. The system 1 preferably comprises a conveyor belt 4 by means of which the coating support 10 is unwound from the first reel 2 and moved forward in the direction of advance indicated by the arrow, that is, from left to right in Figure 1. Three coating stations 1B, 1C, 1D are installed in succession along the belt 4, in order to form superimposed layers respectively indicated by the reference numbers 12, 14 and 16.

More specifically, the formation of the layers 12, 14 and 16 takes place as follows.

With the coating support 10 advancing from left to right as shown in Figure 1, the first coating station 1B is activated for spreading a thermo-adhesive layer 12 on the coating support 10.

Preferably, the thermo-adhesive layer 12 comprises a thermoplastic layer, preferably polyurethane-based, which essentially has the function of allowing the item 50 to be applied to fabrics or garments in general by thermal adhesion (as described below). The thickness of the thermo-adhesive layer 12 is preferably included between 20 and 100 micrometers, more preferably included between 30 and 50 micrometers.

The thermo-adhesive layer 12 preferably has a melting temperature included between 120 and 170°C.

In variant embodiments, the thermo-adhesive layer may comprise different materials such as, for example, a copolyester-based or a polyamide-based thermoplastic layer.

After leaving the station 1B, the thermoplastic layer is heated (dried) by means of an oven 2B so as to form a continuous layer B.

With the continuous layer B advancing from left to right, the second coating station 1C is activated to spread an intermediate layer 14, also commonly referred to as the skin layer.

The skin layer 14 preferably comprises a white material and serves to provide the item 50 with hiding power as well as to define a white base suited to be subsequently used on a fabric of any colour.

The skin layer 14 preferably comprises polyurethane-based materials, or acrylic-based materials, or PVC, or LDPE.

Furthermore, the skin layer 14 preferably comprises pigments, dyes and/or rheological agents.

Advantageously, the skin layer 14 also serves the purpose of acting as a bridge between the thermo-adhesive layer 12 and the layer to be formed thereon, which is described below. The fact that the skin layer 14 serves as a bridge improves the mechanical bond between the thermo-adhesive layer 12 and the adjacent layer formed thereon.

The thickness of the skin layer 14 is preferably included between 20 and 100 micrometres, more preferably included between 20 and 50 micrometres.

However, if having a covering primer is not of interest, a skin layer that is not necessarily white can be used, possibly also a transparent layer, or such a layer 14 can even be omitted. In this case, the system may be made without the second coating station 1C. Obviously, the final item will not have a skin layer, either. The coating station 1C preferably comprises a coating blade 1Ct which receives the material that will form the skin layer 14.

The coating blade 1Ct is used to spread a mix of the materials making up the skin layer 14 on the thermo-adhesive layer 12.

Depending on the composition of the skin layer 14, the station 1C may include additional accessories (not shown in the figure) suited, for example, to heat the mix of components or even to stir the mix in order to ensure the desired fluidity. After leaving the station 1C, the mix is heated (dried) by means of an oven 2C so as to form a continuous layer C.

In a successive coating station 1D, a so-called finish layer 16 is formed, which is suited to receive inks, preferably inks of inkjet printers such as home office and wide-format (professional) printers.

According to the present invention, the finish layer 16 comprises a mixture M of polyamide powders incorporated in a matrix of polymeric material P.

The thickness of the finish layer 16 is preferably included between 10 and 70 micrometres, more preferably included between 15 and 35 micrometres.

The mixture M of polyamide powders is present in a weight percentage included between 250% and 450% with respect to the weight of said matrix of polymeric material P, preferably included between 300% and 400%, more preferably equal to 345%.

The mixture M of polyamide powders comprises:
- a first polyamide powder having a specific surface area included between 15 m²/g and 35 m²/g;
- a second polyamide powder having a specific surface area included between 3 m²/g and 15 m²/g;
- a third polyamide powder having its melting and softening point included between 160°C and 200°C.

In a preferred embodiment, the first polyamide powder has a specific surface area equal to 20 m²/g.

In a preferred embodiment, the second polyamide powder has a specific surface area equal to 6 m²/g.

In a preferred embodiment, the third polyamide powder has a melting point equal to 184°C.

In a preferred embodiment, the first polyamide powder has its melting and softening point included between 90°C and 150°C, preferably included between 130°C and 145°C, more preferably equal to 142°C.

In a preferred embodiment, the second polyamide powder has its melting and softening point included between 90°C and 150°C, preferably included between 130°C and 145°C, more preferably equal to 142°C.

The first polyamide powder is present in a weight percentage included between 25% and 65% with respect to the weight of the mixture M, preferably in a weight percentage included between 40% and 50% with respect to the weight of the mixture M, more preferably in a weight percentage equal to 44%.

The second polyamide powder is present in a weight percentage included between 25% and 65% with respect to the weight of the mixture M, preferably in a weight percentage included between 40% and 50% with respect to the weight of the mixture M, more preferably in a percentage equal to 44%.

The third polyamide powder is present in a weight percentage included between 3% and 18% with respect to the weight of the mixture M, preferably in a weight percentage included between 10% and 15% with respect to the weight of the mixture M, more preferably in a percentage equal to 12%.

In a preferred embodiment, the mixture is made as shown in the table below:

| | Quantity (g) | Melting and softening temperature °C | Specific surface area (m²/g) |
|---|---|---|---|
| 1st powder | 5 | 142 | 20 |
| 2nd powder | 5 | 142 | 6 |
| 3rd powder | 1.4 | 184 | / |

The first polyamide powder is preferably made up of particles with an average particle size included between 5 micrometres and 15 micrometres, preferably included between 8 micrometres and 12 micrometres, more preferably equal to 10 micrometres.

The second polyamide powder is preferably made up of particles with an average particle size included between 15 micrometres and 30 micrometres, preferably included between 18 micrometres and 22 micrometres, more preferably equal to 20 micrometres.

The third polyamide powder is preferably made up of particles with an average particle size included between 5 micrometres and 15 micrometres, preferably included between 8 micrometres and 12 micrometres, more preferably equal to 10 micrometres.

The matrix of polymeric material P comprises a mixture, preferably a 1-Methoxy-2-propanol-based mixture, consisting of a polyurethane-based resin, more preferably an anionic aliphatic polyurethane modified polyester resin.

The matrix of polyurethane polymeric material preferably comprises:
- a bonding resin, preferably anionic aliphatic polyester polyurethane;
- a cross-linking agent, preferably free aliphatic isocyanate.

The bonding resin is present in a weight percentage included between 80% and 100% with respect to the weight of the matrix of polymeric material P, preferably in a weight percentage included between 85% and 95%, more preferably in a weight percentage equal to 91%.

The cross-linking agent is present in a weight percentage included between 3% and 20% with respect to the weight of the matrix of polymeric material P, preferably in a weight percentage included between 5% and 15%, more preferably in a weight percentage equal to 9%.

The coating station 1D preferably comprises a coating blade 1Dt which receives the material that will form the finish layer 16.

The coating blade 1Dt is used to spread a mix of the materials making up the finish layer 16 on the previous continuous layer C to form the finish layer 16. Depending on the composition of the finish layer 16, the station 1D may include further accessories (not shown in the figure) suited, for example, to heat the mix of components or even to stir the mix in order to ensure the desired fluidity.

For example, to ensure the desired fluidity of the mix, a solvent, preferably 1-Methoxy-2-propanol, is also used.

After leaving the station 1D, the mix is heated (dried) by means of an oven 2D so as to form a continuous layer D.

This heating phase causes the evaporation of the solvent, which therefore will not be present in the layer D.

Preferably, the process used to spread the finish layer 16 involves the application of a quantity of material included between 18g/ m² and 24g/ m² in dry conditions. The product D obtained and leaving the station 1D actually constitutes the final item 50.

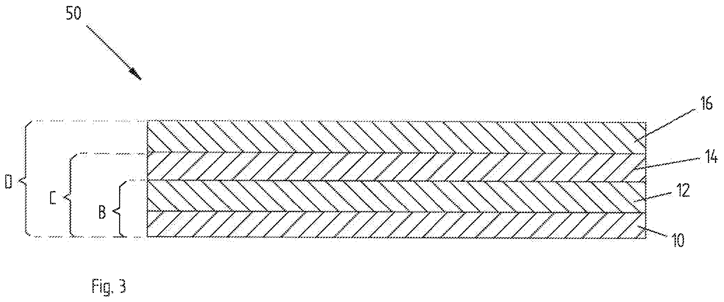

The final item 50 is wound on a special reel 6, ready to be subsequently used and/or cut to size, for example into A4 sheets, as illustrated in Figures 2 and 3. To sum up, the item 50 comprises a layered structure in which the layers have the following characteristics:
- a supporting layer 10 (coating support 10) preferably comprising a polyester film which mainly serves the function of making the item 50 suitable for use in printers, preferably inkjet printers;
- the overlying layer 12 comprises a thermo-adhesive film, preferably polyurethane-based, which essentially has the function of allowing application to fabrics or garments in general by thermal adhesion, providing resistance to abrasion and washing;
- the overlying layer 14 constitutes a so-called "skin" layer, the purpose of which is to provide the item 50 with hiding power during the decoration process performed on fabrics of any colour and to give elasticity to the finished product, improving its mechanical properties;
- the finish layer 16 has the function of receiving and retaining inks, ensuring good printing definition and endowing the product with high washing fastness, which limits colour fading and surface abrasions.

The item 50 made in this way is suited to be printed, for example as shown in Figure 4, by means of a printer 100, for example operated through a computer 102, wherein during the printing step a decoration, for example the design of a star as shown in Figure 5, is transferred onto the external finish layer 16 through the application of inks I.

During a subsequent step, the item 50 with the print (Figure 5) can be cut, if necessary, preferably with the aid of a cutting plotter or by means of simple scissors or other common home cutting tools, in order to obtain an item F, F' with the desired outline.

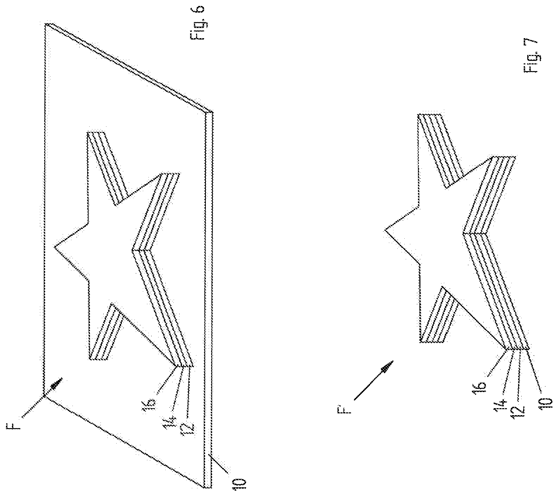

Figure 6 shows the item F which can preferably be obtained using a plotter, in which the layers 12, 14 and 16 of the item 50 are cut while the supporting layer 10 is kept intact.

Figure 7 shows the item F', in which all the layers 10, 12, 14 and 16 of item 50 are removed.

The item F, F' obtained in this way is ready to be applied to a surface, for example a fabric or article of clothing T, such as a T-shirt, sweatshirt or the like. Here below, for ease of explanation, reference is made to a garment T consisting of a T-shirt.

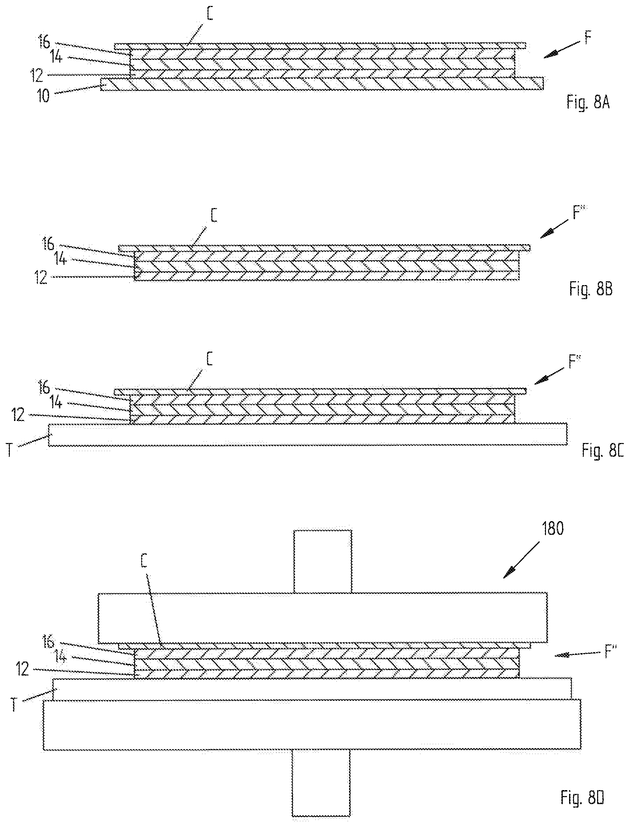

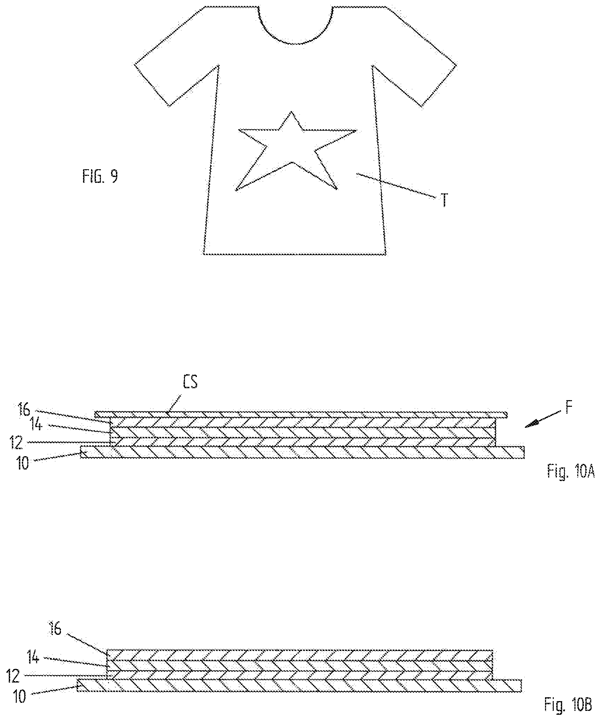

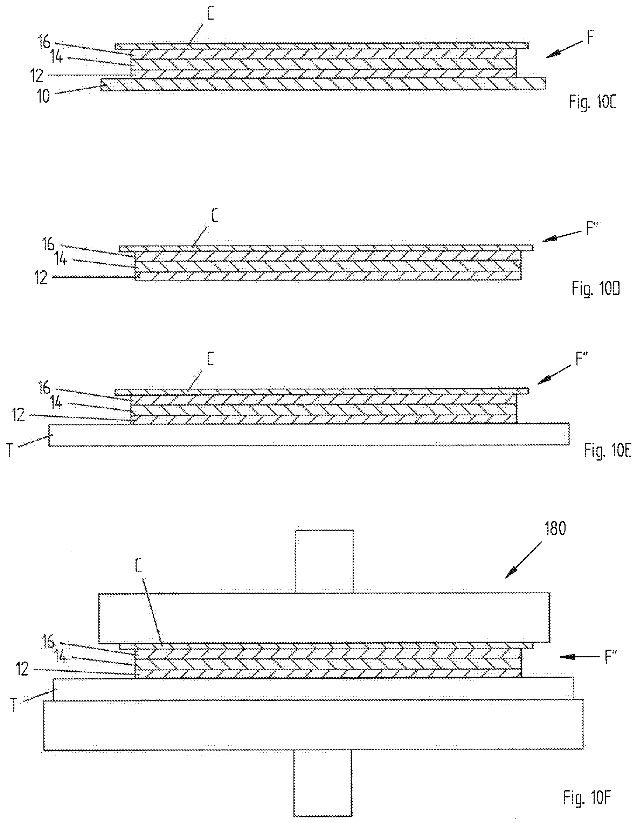

Two preferred methods for applying the decoration/star to the garment T are described below: a first method (Figures 8A-8D), hereinafter referred to as the "do-it-at-home" method, gives priority to the speed of execution and produces a final product with resistance to washing up to 40°C; a second method (Figures 10A-10F), hereinafter referred to as the "professional" method, gives priority to the performance of the final product and ensures resistance to washing at higher temperatures, preferably up to 60°C.

In the "do-it-at-home" application method, an adhesive polyester layer C, or carrier layer C, which can be acrylic-based, silicone-based or rubber-based, is applied (coupled) so as to make it adhere to the printed surface 16 of the item 50 (Figure 8A). In a variant embodiment, the carrier layer may comprise a sheet of adhesive paper.

The supporting layer 10 (coating support 10) is then removed (Figure 8B) and the item F" consisting of the initial layers 12, 14 and 16 of the item 50 and the carrier layer C is applied so as to make it adhere to the desired portion of the garment T (Figure 8C) with the thermo-adhesive layer 12.

In a successive step (Figure 8D), the item F" is fixed to the garment T by applying heat and pressure in a special press 180 (for example, a professional heat press). In a variant embodiment an iron may preferably be used. Preferably, temperatures included between 145°C and 180°C are used, more preferably equal to 155°C. Preferably, a pressure included between 2 and 5 bars is used. The application time is preferably between 5 and 45 seconds, more preferably around 15 seconds.

During this step, the thermo-adhesive layer 12 is softened/melted and transferred (at least partially) onto the garment T so as to impregnate the garment T, wherein, therefore, with the subsequent cooling and hardening of the item (of the previously softened/melted layer), the final fixing of the item itself to the garment T is obtained. It should also be noted that through the application of heat the further result of fixing the inks to the external finish layer 16 is obtained. The inks thus acquire resistance, particularly to washing, even at high temperatures. Once the transfer has been completed with the opening of the press 180, the carrier layer C can advantageously be removed, and the application operations can be completed.

According to a further application method, not illustrated, the supporting layer 10 (coating support 10) can be removed without the aid of an adhesive carrier layer, for example by simply using the hands.

The remaining layers 12, 14 and 16 of the item 50 can then be laid on the garment T and covered with a sheet of silicone paper or non-adhesive polyester, for example baking paper, to be then subjected to the application of heat and pressure in a special press 180.

According to an advantageous aspect of the present invention, the mixture M comprising the first, the second and the third polyamide powder makes it possible to obtain optimal absorption of the inks and superior resistance to washing compared to the known systems. More specifically, to advantage: the first polyamide powder is extremely porous, absorbs the inks and melts upon transfer ensuring washing fastness; the second polyamide powder is moderately porous, absorbs the inks and melts upon transfer ensuring washing fastness; the third polyamide powder has a high melting point, prevents defects in case of transfer with an iron, where temperatures are well above 155°, and is ideal when heat presses are used.

Advantageously, the item 50 according to the present invention makes it possible to obtain the above results (softening/melting and transfer of the thermo-adhesive layer 12 and activation of the inks I) at significantly lower temperatures compared to those required for items made according to the known art.

Lower temperatures obviously have a smaller impact on the fabric or garment, which undergoes less thermal stress, with considerable advantages in the case of garments made of cotton, wool, or similar materials.

Lower temperatures also make it possible to obtain an immediate advantage in terms of energy savings.

Thus, the result is that illustrated in Figure 9, namely a garment T (T-shirt) decorated using the item 50.

The professional application method, as shown in Figures from 10A to 10F, differs from the previously described "do-it-at-home" method in that it includes preliminary steps with respect to the steps of the "do-it-at-home" method. Preferably, in fact, before proceeding with the coupling of the carrier layer C, a silicone paper sheet CS, for example baking paper (Figure 10A), is made adhere (applied) to the finish layer 16, and heat and pressure are applied onto it. Preferably, the method uses temperatures included between 140°C and 180°C, more preferably equal to 155°C, a pressure included between 2 and 5 bars, and a short application time, preferably between 2 and 20 seconds (for example, using a press 180).

Then, the silicone paper CS is removed (Figure 10B) and successively all the steps described above with reference to the "do-it-at-home" method (illustrated in Figures 10C-10F) are carried out.

The pre-heating step just described above has the effect of sealing the finish layer 16, that is, of closing the pores of the polyamide powders, fixing the ink I inside them. This provides additional resistance to the decoration once it has been transferred, in particular ensuring high washing fastness at temperatures up to 60°C.

It has thus been shown, by means of the preceding detailed description of the embodiment of the present invention illustrated in the drawings, that the present invention makes it possible to achieve the desired results while at the same time minimizing the drawbacks observed in the known art.

It should be noted, however, that even though the present invention has been illustrated by means of the preceding detailed description of its embodiment shown in the drawings, the present invention is not limited to the embodiment described above and shown in the drawings. On the contrary, all those variants and modifications of the embodiment described and illustrated herein which appear to be clear and obvious to those skilled in the art fall within the scope of the present invention. For example, as already mentioned above, depending on the requirements and/or circumstances, the skin layer may be omitted. Furthermore, the thickness of each of the layers may also be selected according to needs and/or circumstances. Again, the system may have different characteristics. For example, alternative coating stations to the one illustrated and described may be provided such as, for example, coating stations for "reverse" roll coating, "synchro" coating, or through "millepunti/two tones" printing. Other techniques may consist in laying the polyamide powder on the polymer matrix or in spraying the mixtures thereon.

Furthermore, it should be pointed out that the system and the method illustrated and described above represent a preferred embodiment for making the item according to the present invention. In variant embodiments, however, the layers of the item can be made and mutually coupled by means of systems and corresponding methods different from those described herein. Therefore, the production of the succession of layers of the item and their mutual coupling may be different from what has been described in detail above.

The scope of the present invention is defined by the claims.

## Claims

1. Layered item (50) suited to be printed by means of inks (I), preferably by means of inkjet technology, for decorating a surface of an object (T), in particular a surface of clothing articles (T) such as T-shirts, sweatshirts or the like, said item (50) comprising a thermo-adhesive layer (12) suited to allow said item (50) to be fixed to said surface (T) and a finish layer (16) suited to receive said inks (I), **characterized in that** said finish layer (16) comprises a mixture (M) of polyamide powders incorporated in a matrix of polymeric material (P), said mixture (M) of polyamide powders comprising:
- a first polyamide powder having a specific surface area included between 15 m²/g and 35 m²/g;
- a second polyamide powder having a specific surface area included between 3 m²/g and 15 m²/g;
- a third polyamide powder having its melting and softening point included between 160°C and 200°C.

2. Item (50) according to claim 1, **characterized in that:**
- said first polyamide powder is present in a weight percentage included between 25% and 65% with respect to the weight of said mixture (M), preferably in a weight percentage included between 40% and 50% with respect to the weight of said mixture (M), more preferably in a percentage equal to 44%; and/or
- said second polyamide powder is present in a weight percentage included between 25% and 65% with respect to the weight of said mixture (M), preferably in a weight percentage included between 40% and 50% with respect to the weight of said mixture (M), more preferably in a percentage equal to 44%; and/or
- said third polyamide powder is present in a weight percentage included between 3% and 18% with respect to the weight of said mixture (M), preferably in a weight percentage included between 10% and 15% with respect to the weight of said mixture (M), more preferably in a percentage equal to 12%.

3. Item (50) according to claim 1 or 2, **characterized in that** said mixture (M) of polyamide powders is present in a weight percentage included between 250% and 450% with respect to the weight of said matrix of polymeric material (P), preferably between 300% and 400%, more preferably equal to 345%.

4. Item (50) according to any of the preceding claims, **characterized in that** said matrix of polymeric material (P) comprises a polyurethane-based resin, more preferably an anionic aliphatic polyurethane modified polyester resin.

5. Item (50) according to claim 4, **characterized in that** said matrix of polymeric material (P) comprises:
- a bonding resin, preferably anionic aliphatic polyester polyurethane;
- a cross-linking agent, preferably free aliphatic isocyanate.

6. Item (50) according to any of the preceding claims, **characterized in that** it comprises a supporting layer (10) positioned in contact with said thermo-adhesive layer (12).

7. Item (50) according to any of the preceding claims, **characterized in that** said thermo-adhesive layer (12) comprises a thermoplastic layer, preferably a polyurethane-based and/or copolyester-based and/or polyamide-based thermoplastic layer.

8. Item (50) according to any of the preceding claims, **characterized in that** it furthermore comprises an intermediate skin layer (14) in contact with said thermo-adhesive layer (12) and said finish layer (16).

9. Item (50) according to claim 8, **characterized in that** said second intermediate skin layer (14) comprises polyurethane-based materials, or acrylic-based materials, or PVC, or LDPE.

10. Method for producing an item (50) according to any of the preceding claims, comprising the step of mutually combining said finish layer (16) and said thermo-adhesive layer (12), wherein said finish layer (16) is obtained starting from a mix comprising a mixture (M) of polyamide powders incorporated in a matrix of polymeric material (P), said mixture (M) of polyamide powders comprising:
- a first polyamide powder having a specific surface area included between *15* m²/g and 35 m²/g;
- a second polyamide powder having a specific surface area included between 3 m²/g and 15 m²/g;
- a third polyamide powder having its melting and softening point included between 160°C and 200°C.

11. Method according to claim 10, **characterized in that** said mutual coupling is obtained by spreading said at least one finish layer (16) on said thermo-adhesive layer (12), preferably by spreading said at least one finish layer (16) directly on said thermo-adhesive layer (12).

12. Method according to claim 10, **characterized in that** it comprises a step of making said intermediate skin layer (14) that is formed by spreading a mix comprising polyurethane-based material, or acrylic-based material, or PVC, or LDPE on said thermo-adhesive layer (12).

13. Method according to claim 12, **characterized in that** said finish layer (16) is spread on said intermediate skin layer (14).

14. Method according to any of the claims from 10 to 13, **characterized in that** said thermo-adhesive layer (12) is spread on said supporting layer (10).

15. Object having a decorated surface, **wherein** the decoration of said decorated surface is obtained through the application of an item (50) according to any of the claims from 1 to 9 to said surface or through the application of an item (50) made according to the method described in claims from 10 to 14.

16. Method for decorating a surface of an object (T) by means of inks (I), using a layered item (50) according to any of the claims from 6 to 9, **characterized in that** it comprises the following steps:
a) printing said finish layer (16) of said layered item (50) through the application of inks (I), preferably by means of an inkjet printer;
b) making a carrier layer (C) adhere to the printed surface of said finish layer (16);
c) removing the supporting layer (10);
d) making the thermo-adhesive layer (12) adhere to the surface of the object (T) to be decorated;
e) applying heat and pressure to said carrier layer (C) for a predetermined time interval in order to fix said thermo-adhesive layer (12) to the surface of the object (T) to be decorated;
f) removing the carrier layer (C).

17. Method according to claim 16, **characterized in that** it comprises, between step a) and step b), the following steps:
a1) making a silicone paper sheet (CS) adhere to the printed surface of said finish layer (16);
a2) applying heat and pressure to said silicone paper sheet (CS) for a predetermined time interval in order to fix the inks inside said finish layer (16);
a3) removing the silicone paper sheet (CS).

## Patentansprüche

1. Geschichteter Gegenstand (50), der geeignet ist, mittels Tinten (I), vorzugsweise mittels Tintenstrahltechnologie, bedruckt zu werden, um eine Oberfläche eines Objekts (T), insbesondere eine Oberfläche von Kleidungsstücken (T) wie T-Shirts, Sweatshirts oder dergleichen, zu dekorieren, wobei der Gegenstand (50) eine thermische Haftschicht (12), die geeignet ist, das Fixieren des Gegenstands (50) auf der Oberfläche (T) zu ermöglichen, und eine Deckschicht (16) umfasst, die geeignet ist, die Tinten (I) aufzunehmen, **dadurch gekennzeichnet, dass** die Deckschicht (16) eine Mischung (M) von Polyamidpulvern umfasst, die in eine Matrix aus polymerem Material (P) eingearbeitet sind, wobei die Mischung (M) von Polyamidpulvern Folgendes umfasst:
- ein erstes Polyamidpulver, das eine spezifische Oberfläche zwischen 15 m²/g und 35 m²/g aufweist;
- ein zweites Polyamidpulver, das eine spezifische Oberfläche zwischen 3 m²/g und 15 m²/g aufweist;
- ein drittes Polyamidpulver, dessen Schmelz- und Erweichungspunkt zwischen 160 °C und 200 °C ist.

2. Gegenstand (50) nach Anspruch 1, **dadurch gekennzeichnet, dass:**
- das erste Polyamidpulver in einem Gewichtsprozentsatz vorhanden ist, der im Hinblick auf das Gewicht der Mischung (M) zwischen 25 % und 65 % beinhaltet, vorzugsweise in einem Gewichtsprozentsatz, der im Hinblick auf das Gewicht der Mischung (M) zwischen 40 % und 50 % beinhaltet, bevorzugt in einem Prozentsatz gleich 44 %; und/oder
- das zweite Polyamidpulver in einem Gewichtsprozentsatz vorhanden ist, der im Hinblick auf das Gewicht der Mischung (M) zwischen 25 % und 65 % beinhaltet, vorzugsweise in einem Gewichtsprozentsatz, der im Hinblick auf das Gewicht der Mischung (M) zwischen 40 % und 50 % beinhaltet, bevorzugt in einem Prozentsatz gleich 44 %; und/oder
- das dritte Polyamidpulver in einem Gewichtsprozentsatz vorhanden ist, der im Hinblick auf das Gewicht der Mischung (M) zwischen 3 % und 18 % beinhaltet, vorzugsweise in einem Gewichtsprozentsatz, der im Hinblick auf das Gewicht der Mischung (M) zwischen 10 % und 15 % beinhaltet, bevorzugt in einem Prozentsatz gleich 12 %.

3. Gegenstand (50) nach Anspruch 1 oder 2, **dadurch gekennzeichnet, dass** die Mischung (M) aus Polyamidpulvern in einem Gewichtsprozentsatz beinhaltet ist, der im Hinblick auf das Gewicht der Matrix aus polymerem Material (P) zwischen 250 % und 450 %, vorzugsweise zwischen 300 % und 400 %, bevorzugter gleich 345 %, liegt.

4. Gegenstand (50) nach einem der vorstehenden Ansprüche, **dadurch gekennzeichnet, dass** die Matrix aus polymerem Material (P) ein Harz auf Polyurethanbasis umfasst, vorzugsweise ein anionisches, aliphatisches, mit Polyurethan modifiziertes Polyesterharz.

5. Gegenstand (50) nach Anspruch 4, **dadurch gekennzeichnet, dass** die Matrix aus polymerem Material (P) umfasst:
- ein Bindemittelharz, vorzugsweise ein anionisches aliphatisches Polyesterpolyurethan;
- ein Mittel zur Quervernetzung, vorzugsweise ein freies aliphatisches Isocyanat.

6. Gegenstand (50) nach einem der vorstehenden Ansprüche, **dadurch gekennzeichnet, dass** er eine Trägerschicht (10) umfasst, die in Berührung mit der Thermo-Haftschicht (12) positioniert ist.

7. Gegenstand (50) nach einem der vorstehenden Ansprüche, **dadurch gekennzeichnet, dass** die Thermo-Haftschicht (12) eine thermoplastische Schicht umfasst, vorzugsweise eine thermoplastische Schicht auf Polyurethanbasis und/oder Copolyesterbasis und/oder Polyamidbasis.

8. Gegenstand (50) nach einem der vorstehenden Ansprüche, **dadurch gekennzeichnet, dass** er des Weiteren eine Zwischenhautschicht (14) umfasst, die mit der Thermo-Haftschicht (12) und der Deckschicht (16) in Berührung ist.

9. Gegenstand (50) nach Anspruch 8, **dadurch gekennzeichnet, dass** die zweite Zwischenhautschicht (14) Materialien auf Polyurethanbasis oder Materialien auf Acrylbasis oder PVC oder LDPE umfasst.

10. Verfahren zum Herstellen eines Gegenstands (50) nach einem der vorstehenden Ansprüche, umfassend den Schritt des gegenseitigen Kombinierens der Deckschicht (16) und der Thermo-Haftschicht (12), wobei die Deckschicht (16) ausgehend von einem Gemisch hergestellt wird, das eine Mischung (M) von Polyamidpulvern umfasst, die in eine Matrix aus polymerem Material (P) eingearbeitet sind, wobei die Mischung (M) von Polyamidpulvern umfasst:
- ein erstes Polyamidpulver, das eine spezifische Oberfläche zwischen 15 m²/g und 35 m²/g aufweist;
- ein zweites Polyamidpulver, das eine spezifische Oberfläche zwischen 3 m²/g und 15 m²/g aufweist;
- ein drittes Polyamidpulver, dessen Schmelz- und Erweichungspunkt zwischen 160 °C und 200 °C ist.

11. Verfahren nach Anspruch 10, **dadurch gekennzeichnet, dass** die gegenseitige Kopplung durch Auftragen der mindestens einen Deckschicht (16) auf die Thermo-Haftschicht (12) erhalten wird, vorzugsweise durch Auftragen der mindestens einen Deckschicht (16) direkt auf die Thermo-Haftschicht (12).

12. Verfahren nach Anspruch 10, **dadurch gekennzeichnet, dass** es einen Schritt zur Herstellung der Zwischenschicht (14) umfasst, die durch Auftragen eines Gemischs, das Material auf Polyurethanbasis oder Material auf Acrylbasis oder PVC oder LDPE umfasst, auf die Thermo-Haftschicht (12) gebildet wird.

13. Verfahren nach Anspruch 12, **dadurch gekennzeichnet, dass** die Deckschicht (16) auf die Zwischenhautschicht (14) aufgetragen wird.

14. Verfahren nach einem der Ansprüche 10 bis 13, **dadurch gekennzeichnet, dass** die Thermo-Haftschicht (12) auf die Trägerschicht (10) aufgebracht wird.

15. Objekt, das eine dekorierte Oberfläche aufweist, **wobei** die Dekoration der dekorierten Oberfläche durch das Aufbringen eines Gegenstandes (50) nach einem der Ansprüche I bis 9 auf die Oberfläche oder durch das Aufbringen eines Gegenstandes (50) gemäß dem in den Ansprüchen 10 bis 14 beschriebenen Verfahren erhalten wird.

16. Verfahren zum Dekorieren einer Oberfläche eines Objekts (T) mit Hilfe von Tinten (I), wobei ein geschichteter Gegenstand (50) gemäß einem der Ansprüche 6 bis 9 verwendet wird, **dadurch gekennzeichnet, dass** es die folgenden Schritte umfasst:
a) Bedrucken der Deckschicht (16) des geschichteten Gegenstands (50) durch Auftragen von Tinten (I), vorzugsweise mit einem Tintenstrahldrucker;
b) Anheften einer Trägerschicht (C) an die bedruckte Oberfläche der Endschicht (16);
c) Entfernen der Trägerschicht (10);
d) Anhaften der Thermo-Haftschicht (12) an der Oberfläche des zu dekorierenden Objekts (T);
e) Anwenden von Wärme und Druck auf die Trägerschicht (C) während eines vorbestimmten Zeitintervalls, um die Thermo-Haftschicht (12) auf der Oberfläche des zu dekorierenden Objekts (T) zu fixieren;
f) Entfernen der Trägerschicht (C).

17. Verfahren nach Anspruch 16, **dadurch gekennzeichnet, dass** es zwischen Schritt a) und Schritt b) die folgenden Schritte umfasst:
a1) Anheften eines Blattes aus Silikonpapier (CS) an die bedruckte Oberfläche der Endschicht (16);
a2) Anwenden von Wärme und Druck auf das Blatt aus Silikonpapier (CS) während eines vorbestimmten Zeitintervalls, um die Druckfarben innerhalb der Deckschicht (16) zu fixieren;
a3) Entfernen des Blattes aus Silikonpapier (CS).

## Revendications

1. Article en couches (50) apte à être imprimé au moyen d'encres (I), de préférence au moyen d'une technologie à jet d'encre, pour la décoration d'une surface d'un objet (T), en particulier d'une surface d'articles vestimentaires (T) tels que tee-shirts, sweat-shirts ou similaires, ledit article (50) comprenant une couche thermo-adhésive (12) apte à permettre la fixation dudit article (50) sur ladite surface (T) et une couche de finition (16) apte à recevoir lesdites encres (I), **caractérisé en ce que** ladite couche de finition (16) comprend un mélange (M) de poudres de polyamide incorporées dans une matrice de matériau polymère (P), ledit mélange (M) de poudres de polyamide comprenant :
- une première poudre de polyamide ayant une surface spécifique comprise entre 15m²/g et 35m²/g ;
- une deuxième poudre de polyamide ayant une surface spécifique comprise entre 3m²/g et 15m²/g ;
- une troisième poudre de polyamide dont les points de fusion et de ramollissement sont compris entre 160 °C et 200 °C.

2. Article (50) selon la revendication 1, **caractérisé en ce que** :
- ladite première poudre de polyamide est présente dans un pourcentage en poids compris entre 25 % et 65 % par rapport au poids dudit mélange (M), de préférence dans un pourcentage en poids compris entre 40 % et 50 % par rapport au poids dudit mélange (M), de manière davantage préférée dans un pourcentage égal à 44 % ; et/ou
- ladite deuxième poudre de polyamide est présente dans un pourcentage en poids compris entre 25 % et 65 % par rapport au poids dudit mélange (M), de préférence dans un pourcentage en poids compris entre 40 % et 50 % par rapport au poids dudit mélange (M), de manière davantage préférée dans un pourcentage égal à 44 % ; et/ou
- ladite troisième poudre de polyamide est présente dans un pourcentage en poids compris entre 3 % et 18 % par rapport au poids dudit mélange (M), de préférence dans un pourcentage en poids compris entre 10 % et 15 % par rapport au poids dudit mélange (M), de manière davantage préférée dans un pourcentage égal à 12 %.

3. Article (50) selon la revendication 1 ou 2, **caractérisé en ce que** ledit mélange (M) de poudres de polyamide est présent dans un pourcentage en poids compris entre 250 % et 450 % par rapport au poids de ladite matrice de matériau polymère (P), de préférence entre 300 % et 400 %, de manière davantage préférée égal à 345 %.

4. Article (50) selon l'une quelconque des revendications précédentes, **caractérisé en ce que** ladite matrice de matériau polymère (P) comprend une résine à base de polyuréthane, de manière davantage préférée une résine de polyester modifiée par polyuréthane aliphatique anionique.

5. Article (50) selon la revendication 4, **caractérisé en ce que** ladite matrice de matériau polymère (P) comprend :
- une résine de liaison, de préférence un polyester polyuréthane aliphatique anionique ;
- un agent de réticulation, de préférence un isocyanate aliphatique libre.

6. Article (50) selon l'une quelconque des revendications précédentes, **caractérisé en ce qu'**il comprend une couche de support (10) placée en contact avec ladite couche thermo-adhésive (12).

7. Article (50) selon l'une quelconque des revendications précédentes, **caractérisé en ce que** ladite couche thermo-adhésive (12) comprend une couche thermoplastique, de préférence une couche thermoplastique à base de polyuréthane et/ou à base de copolyester et/ou à base de polyamide.

8. Article (50) selon l'une quelconque des revendications précédentes, **caractérisé en ce qu'**il comprend en outre une couche de peau intermédiaire (14) en contact avec ladite couche thermo-adhésive (12) et ladite couche de finition (16).

9. Article (50) selon la revendication 8, **caractérisé en ce que** ladite seconde couche de peau intermédiaire (14) comprend des matériaux à base de polyuréthane, ou des matériaux à base d'acrylique, ou du PVC, ou du LDPE.

10. Procédé de fabrication d'un article (50) selon l'une quelconque des revendications précédentes, comprenant l'étape de combinaison mutuelle de ladite couche de finition (16) et de ladite couche thermo-adhésive (12), dans lequel ladite couche de finition (16) est obtenue à partir d'un mélange comprenant un mélange (M) de poudres de polyamide incorporées dans une matrice de matériau polymère (P), ledit mélange (M) de poudres de polyamide comprenant :
- une première poudre de polyamide ayant une surface spécifique comprise entre 15m²/g et 35m²/g ;
- une deuxième poudre de polyamide ayant une surface spécifique comprise entre 3m²/g et 15m²/g ;
- une troisième poudre de polyamide dont les points de fusion et de ramollissement sont compris entre 160 °C et 200 °C.

11. Procédé selon la revendication 10, **caractérisé en ce que** ledit couplage mutuel est obtenu en étalant ladite au moins une couche de finition (16) sur ladite couche thermo-adhésive (12), de préférence en étalant ladite au moins une couche de finition (16) directement sur ladite couche thermo-adhésive (12).

12. Procédé selon la revendication 10, **caractérisé en ce qu'**il comprend une étape de réalisation de ladite couche de peau intermédiaire (14) qui est formée par l'étalement d'un mélange comprenant un matériau à base de polyuréthane, ou un matériau à base d'acrylique, ou de PVC, ou de LDPE sur ladite couche thermo-adhésive (12).

13. Procédé selon la revendication 12, **caractérisé en ce que** ladite couche de finition (16) est étalée sur ladite couche de peau intermédiaire (14).

14. Procédé selon l'une quelconque des revendications de 10 à 13, **caractérisé en ce que** ladite couche thermo-adhésive (12) est étalée sur ladite couche de support (10).

15. Objet ayant une surface décorée, **dans lequel** la décoration de ladite surface décorée est obtenue par l'application d'un article (50) selon l'une quelconque des revendications de 1 à 9 à ladite surface ou par l'application d'un article (50) réalisé selon le procédé décrit dans les revendications de 10 à 14.

16. Procédé de décoration d'une surface d'un objet (T) au moyen d'encres (I), utilisant un élément stratifié (50) selon l'une quelconque des revendications de 6 à 9, **caractérisé en ce qu'**il comprend les étapes suivantes :
a) l'impression de ladite couche de finition (16) dudit article en couches (50) par l'application d'encres (I), de préférence au moyen d'une imprimante à jet d'encre ;
b) l'action de faire adhérer une couche support (C) à la surface imprimée de ladite couche de finition (16) ;
c) le retrait de la couche de support (10) ;
d) l'action de faire adhérer la couche thermo-adhésive (12) à la surface de l'objet (T) à décorer ;
e) l'application de chaleur et de pression à ladite couche support (C) pendant un intervalle de temps prédéterminé afin de fixer ladite couche thermo-adhésive (12) à la surface de l'objet (T) à décorer ;
f) le retrait de la couche de support (C).

17. Procédé selon la revendication 16, **caractérisé en ce qu'**il comprend, entre l'étape a) et l'étape b), les étapes suivantes :
a1) l'action de faire adhérer une feuille de papier siliconé (CS) à la surface imprimée de ladite couche de finition (16) ;
a2) l'application de chaleur et de pression à ladite feuille de papier siliconé (CS) pendant un intervalle de temps prédéterminé afin de fixer les encres à l'intérieur de ladite couche de finition (16) ;
a3) le retrait de la feuille de papier siliconé (CS).
